# EUROPÄISCHE PATENTANMELDUNG

(11) **EP 3 888 454 A1**
(43) Veröffentlichungstag der Anmeldung: **06.10.2021**
(21) Anmeldenummer: 20185590.5
(22) Anmeldetag: 14.07.2020
(51) Int. Cl.: A01K 1/035, A01K 15/02, A63B 9/00, A63B 69/00

(54) **VORRICHTUNG ZUR BEFESTIGUNG VON KLETTERELEMENTEN AN EINER WAND**

(30) Priorität: 02.04.2020 DE 202020101804 U
(71) Anmelder: Trixie Heimtierbedarf GmbH & Co. KG, 24963 Tarp (DE)
(72) Erfinder: Noack, Tatjana, 24996 Sterup (DE); Blajanov, Kathrin, 24943 Flensburg (DE)
(74) Vertreter: dompatent von Kreisler Selting Werner - Partnerschaft von Patent- und Rechtsanwälten mbB

(57) **Zusammenfassung**

Die Vorrichtung (10, 10a) zur Befestigung von langgestreckten Kletterelementen (26) an einer Wand (16, 28), mit mindestens einem ersten flächigen Basiselement (12), das zur Befestigung an der Wand (16, 28) ausgebildet ist, wobei das Basiselement (12) eine Anlagefläche für die Wand und eine auf der der Anlagefläche gegenüberliegenden Seite ausgebildete Haltefläche (14, 14a, 14b) aufweist, ist gekennzeichnet durch mindestens zwei flächige Befestigungselemente (18a, 18b, 18c), die jeweils rechtwinklig von der Haltefläche (14, 14a, 14b) abstehen und in einem Winkel α im Bereich 0°<α≤90° zueinander angeordnet sind, wobei jedes Befestigungselement (18a, 18b, 18c) eine nach außen weisende Befestigungsfläche (24, 24a, 24b) aufweist, die zur Befestigung eines langgestreckten Kletterelements (26) ausgebildet ist.

## Beschreibung

Die Erfindung betrifft eine Vorrichtung zur Befestigung von meist langgestreckten Kletterelementen an einer Wand.

Bei den Kletterelementen kann es sich beispielsweise um zylindrisch ausgebildete Kratzstämme für Hauskatzen handeln, die an einer Wand, wie z.B. der Innenwand eines Raumes, zu befestigen sind. Bei den Kletterelementen kann es sich um jegliche Art meist langgestreckter Elemente handeln, die zum Teil aneinandergereiht an der Wand zu befestigen sind, um eine Kletterwand für Tiere, zum Beispiel Haustiere, oder Menschen zu schaffen. Alternativ oder ergänzend kann es sich bei zumindest einem der Kletterelemente um eine Plattform handeln, die als Liegefläche für ein Haustier dienen soll.

Es ist bekannt, Befestigungsvorrichtungen in L-Form zu verwenden, bei denen ein Schenkel an der Wand befestigt wird und an dem anderen Schenkel das Kletterelement befestigt wird.

Unter dem Begriff "Wand" wird vorliegend jeder an einen Raum angrenzende flächige Untergrund verstanden, wie zum Beispiel eine Raumwand, eine Raumdecke, eine Trennwand, eine Trägerplatte, usw.

Der Erfindung liegt die Aufgabe zugrunde, eine Befestigungsvorrichtung für Kletterelemente zu schaffen, mit der auf einfache Weise ein zusammenhängendes, dreidimensionales System aus aneinandergereihten Kletterelementen an einem Untergrund befestigt werden kann.

Die erfindungsgemäße Vorrichtung zur Befestigung von Kletterelementen an einer Wand weist mindestens ein erstes flächiges Basiselement auf, das zur Befestigung an der Wand ausgebildet ist. Hierzu weist das Basiselement eine Anlagefläche für die Wand auf, mit der das Basiselement flächig an die Wand angelegt und an dieser befestigt werden kann, beispielsweise durch eine Klebe-, Schraub- und/oder Steckverbindung. Auf der der Anlagefläche gegenüberliegenden Seite weist das Basiselement eine Haltefläche auf, von der mindestens zwei flächige Befestigungselemente rechtwinklig abstehen. Jedes Befestigungselement bildet dadurch mit dem Basiselement einen Winkel von 90°. Die Befestigungselemente sind zueinander in einem Winkel α im Bereich von 0°<α≤90° angeordnet. Das bedeutet, dass benachbarte Befestigungselemente zueinander einen Winkel bilden, der größer ist als 0° und geringer oder gleich 90° ist. Jedes Befestigungselement weist eine Innenseite und eine Außenseite auf. Die Innenseiten der Befestigungselemente sind einander zugewandt und in Richtung auf die Mitte des Basiselements gerichtet. Die Außenseiten sind auf den den Innenseiten gegenüberliegenden Seiten der Befestigungselemente angeordnet. Jede Außenseite eines Befestigungselements bildet eine Befestigungsfläche, die zur Befestigung eines der langgestreckten Kletterelemente ausgebildet ist. Dadurch weist jedes Befestigungselement eine nach außen weisende Befestigungsfläche für ein Kletterelement auf.

Typischerweise sind die Kletterelemente langgestreckt und haben an ihren einander gegenüberliegenden Enden eine Stirnseite, mit der das Kletterelement an der Befestigungsfläche eines Befestigungselements angebracht wird.

Die beanspruchte Befestigungsvorrichtung ermöglicht es, mehrere Kletterelemente mit jeweils einer ihrer Stirnseiten zu befestigen, so dass die mehreren Kletterelemente durch die beanspruchte Vorrichtung miteinander verbunden werden und an einer Wand gehalten werden, sobald das Basiselement an der Wand befestigt ist.

Mit mehreren Befestigungsvorrichtungen der beanspruchten Art kann so ein System aus lückenlos aneinandergereihten Kletterelementen beliebig zusammengestellt und an einer Wand befestigt werden.

Das Basiselement kann eine Kreisscheibe oder eine Vieleckscheibe, beispielsweise nach Art eines Rechtecks, Quadrats oder Dreiecks sein.

Jedes der Befestigungselemente und/oder jedes Basiselement kann mit einem Schraubloch zur Herstellung einer Schraubverbindung und/oder mit einer Klebeschicht zum Herstellen einer Klebverbindung versehen sein. Alternativ oder ergänzend sind auch Steckverbindungen, z.B. mit Stehbolzen und Rampamuffe, Klick- oder Rastverbindungen denkbar, wobei die entsprechenden komplementären Elemente zum Herstellen der Verbindungen zwischen Befestigungselement und Basiselelement, d.h. die Bolzen, Muffen, Rastelemente usw. an dem jeweiligen Befestigungselement und/oder Basiselement vorgesehen sind.

Bei einem Ausführungsbeispiel der Befestigungsvorrichtung ist ein Basiselement mit mindestens drei Befestigungselementen versehen, von denen zwei Befestigungselemente rechtwinklig zueinander angeordnet sind und das dritte Befestigungselement einen Winkel größer als 0° und kleiner als 90° und insbesondere von etwa 45° zu jedem der beiden anderen Befestigungselemente bildet. Die beschriebenen und beanspruchten Winkel sind dabei in Bezug auf die Innenseiten bzw. in Bezug auf die Befestigungsflächen benachbarter Befestigungselemente definiert. Denkbar ist zudem, dass mindestens eines der Befestigungselemente rotierbar an dem Basiselement gelagert ist, sodass der Winkel zwischen zwei benachbarten Befestigungselementen veränderbar ist.

Bei einer besonderen Ausführungsform der erfindungsgemäßen Vorrichtung weist das Basiselement zwei Teile mit jeweils einer Anlagefläche auf, wobei die beiden Anlageflächen rechtwinklig zueinander angeordnet sind, so dass die Befestigungsvorrichtung in einer Raumecke an zwei rechtwinklig aufeinandertreffenden Wänden befestigt werden kann. Auf der jeder Anlagefläche gegenüberliegenden Seite des Basiselements ist eine Haltefläche ausgebildet, so dass auch beide Halteflächen rechtwinklig zueinander angeordnet sind. Jede der beiden Halteflächen trägt eines der beiden Befestigungselemente, so dass die beiden Befestigungselemente rechtwinklig zueinander angeordnet sind. Mit Hilfe dieses Ausführungsbeispiels ist es möglich, das System aus Kletterelementen lückenlos auch über benachbarte, in einer Raumecke aufeinandertreffende Wände hinaus zu bilden.

Dabei ist eine Verbindungsplatte mit rechteckiger und beispielsweise quadratischer Grundform vorgesehen, die eine erste Seite aufweist, von der der erste Teil des Basiselements und das erste Befestigungselement abstehen, während von einer zweiten, der ersten Seite gegenüberliegenden Seite der Verbindungsplatte der zweite Teil des Basiselements und das zweite Befestigungselement abstehen. Dadurch sind die beiden Teile des Befestigungselements auf einander gegenüberliegenden Seiten der Verbindungsplatte angeordnet und durch diese miteinander verbunden. Entsprechend sind auch die beiden Befestigungselemente auf einander gegenüberliegenden Seiten der Verbindungsplatte angeordnet und durch diese miteinander verbunden.

Insbesondere weist die Verbindungsplatte vier voneinander verschiedene äußere Kanten oder Ränder auf, wobei an die erste Kante der erste Teil des Basiselements grenzt, während an die zweite Kante das erste Befestigungselement grenzt. In entsprechender Weise grenzt an die dritte Kante der zweite Teil des Basiselements, während an die vierte Kante das zweite Befestigungselement grenzt. Dabei sind die erste Kante und die dritte Kante auf einander gegenüberliegenden Seiten der Verbindungsplatte angeordnet, während die zweite und die vierte Kante ebenfalls auf einander gegenüberliegenden Seiten der Verbindungsplatte angeordnet sind. Benachbarte Kanten grenzen dabei jeweils in gemeinsamen Ecken unter einem rechten Winkel aneinander.

Im Folgenden werden anhand der Figuren Ausführungsbeispiele der Erfindung näher erläutert.

Es zeigen:
- Figur 1: ein erstes Ausführungsbeispiel der Befestigungsvorrichtung,
- Figur 2: ein zweites Ausführungsbeispiel der Befestigungsvorrichtung,
- Figur 3: ein mit den Ausführungsbeispielen der Figuren 1 und 2 gebildetes System aus Kletterelementen,
- Figur 4: ein drittes Ausführungsbeispiel der Befestigungsvorrichtung, und
- Figur 5: ein mit den Ausführungsbeispielen nach den Figuren 1 und 4 gebildetes System aus Kletterelementen.

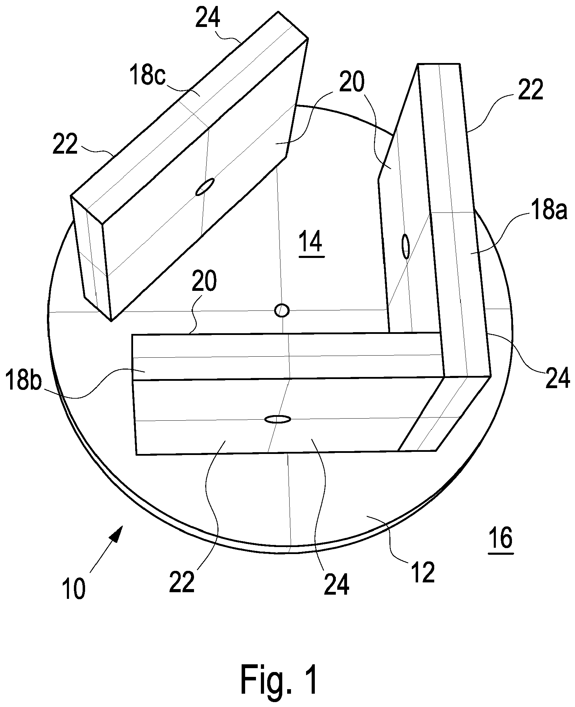

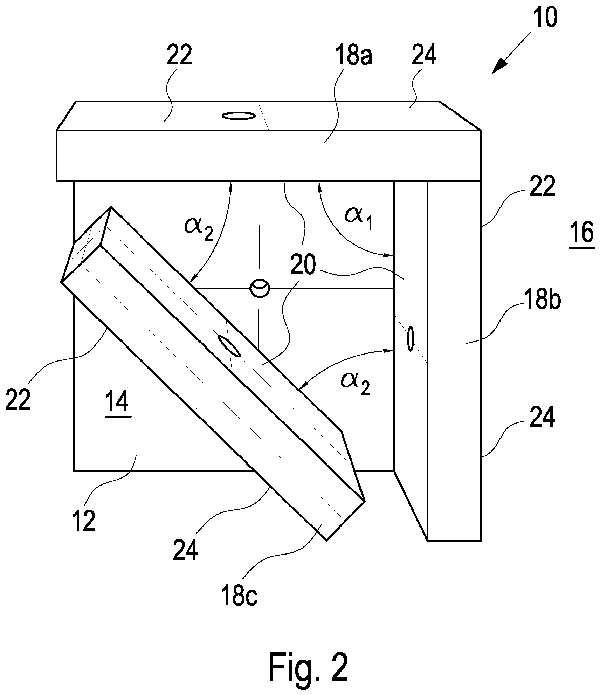

Bei den Ausführungsbeispielen nach den Figuren 1 und 2 ist das Basiselement 12 jeder Vorrichtung als flächige Scheibe ausgebildet, die jeweils eine Haltefläche 14 und auf der der Haltefläche 14 gegenüberliegenden und in den Figuren nicht dargestellten Seite eine Anlagefläche aufweisen.

Mit der Anlagefläche ist die Vorrichtung an einem flächigen Untergrund in Form einer Wand, bei der es sich im vorliegenden Ausführungsbeispiel um eine Raumwand 16 handelt, befestigt.

Von der Haltefläche 14 ragen jeweils rechtwinklig zu der Haltfläche 14 angeordnete Befestigungselemente 18a, 18b, 18c auf. Die Befestigungselemente 18a, 18b, 18c sind jeweils flächige Scheiben und insbesondere rechteckförmige Scheiben in Form flacher Quader.

Die Befestigungselemente 18a, 18b, 18c haben einander zugewandte Innenseiten 20 und auf ihren den Innenseiten 20 gegenüberliegenden Außenseiten 22 jeweils eine Befestigungsfläche 24. Die Befestigungsflächen 24 sind jeweils zum Anliegen, Halten, Tragen und/oder Befestigen der Stirnseite eines langgestreckten, zylindrischen Kletterelements 26 ausbildet. Mindestens eines der Befestigungselemente 18a, 18b, 18c kann dabei rotierbar an dem Basiselement 12 gelagert sein, um den Winkel zu einem benachbarten Befestigungselement verändern zu können.

Die Innenseiten 20 der beiden Befestigungselemente 18a, 18b bilden einen Winkel α₁ von 90°, weil die Befestigungselemente 18a, 18b rechtwinklig zueinander angeordnet sind. Dadurch sind auch die beiden Befestigungsflächen 24 der Befestigungselemente 18a, 18b rechtwinklig zueinander angeordnet. Zwei an den Befestigungsflächen 24 der Befestigungsflächen 18a, 18b angebrachte Kletterelemente 26 sind dann ebenfalls rechtwinklig zueinander angeordnet.

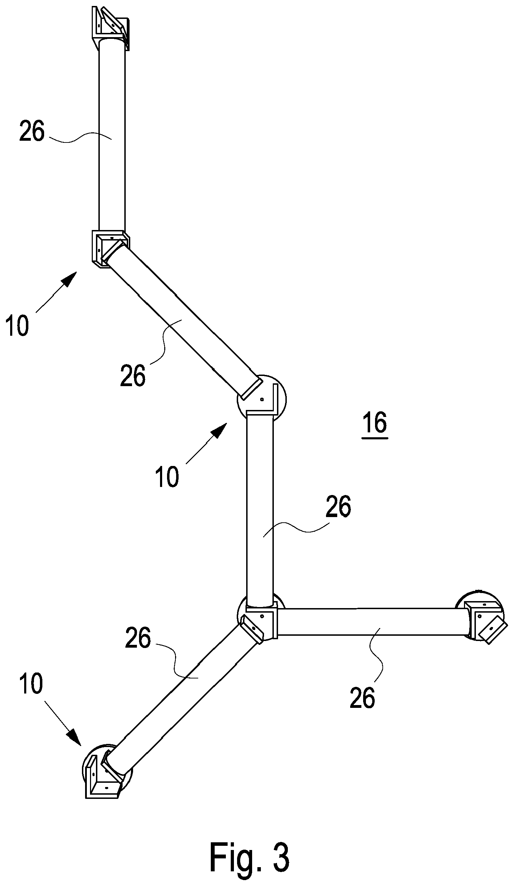

Die Innenseite 20 des dritten Befestigungselements 18c bildet zu der Innenseite 20 jedes der beiden Befestigungselemente 18a, 18b einen Winkel α₂ von 45°, so dass die Außenseiten 24 der benachbarten Befestigungselemente 18c und 18b einen Winkel von 135° zueinander bilden. Entsprechendes gilt für die Außenseiten 22 und Befestigungsflächen 24 der Befestigungselemente 18c und 18a. Dadurch verläuft ein der Befestigungsfläche 24 des dritten Befestigungselements 18c angebrachtes Kletterelement 26 in einem Winkel α von 135° zu einem benachbarten Kletterelement 26, das an dem ersten Befestigungselement 18a oder an dem zweiten Befestigungselement 18b befestigt ist, wie in Figur 3 erkennbar ist.

Dadurch ist es möglich, ein zusammenhängendes, nahezu lückenloses System aus benachbarten, aneinandergereihten oder sternförmig zulaufenden Kletterelementen zu bilden.

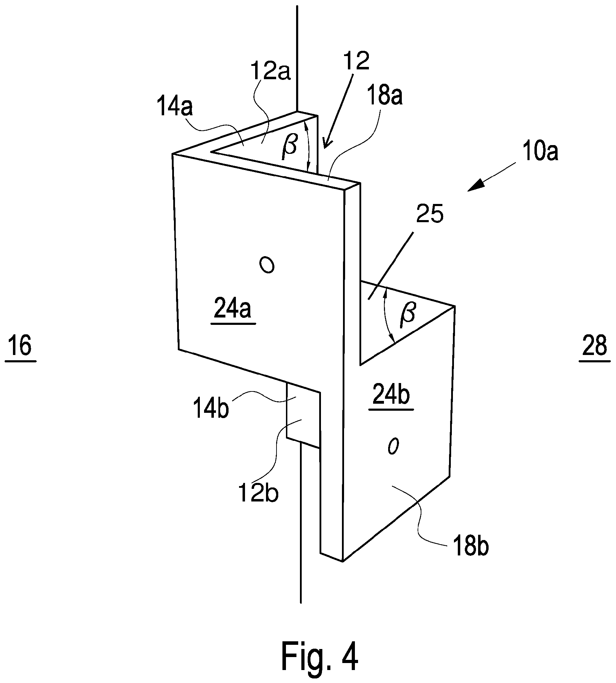

Bei einem weiteren Ausführungsbeispiel, das in Figur 4 dargestellt und mit dem Bezugszeichen 10a versehen ist, weist die Befestigungsvorrichtung 10a ein zweiteiliges Basiselement 12 auf, dessen erster Teil eine erste Anlagefläche bildet, die in Figur 4 an der Raumwand 16 anliegt und an dieser befestigt ist. Der zweite Teil des Basiselements 12 weist eine zweite, von der ersten Anlagefläche verschiedene Anlagefläche auf, die an einer von der Raumwand 16 verschiedenen Raumwand 28 anliegt und befestigt ist. Die beiden Raumwände 16, 28 sind rechtwinklig zueinander angeordnet und bilden eine Raumecke, in der die Vorrichtung 10a angeordnet ist.

Jeder der beiden Teile des Basiselements 12 weist eine auf der der jeweiligen Anlagefläche gegenüberliegenden Seite angeordnete Haltefläche 14a, 14b auf, so dass die beiden Halteflächen 14a, 14b rechtwinklig zueinander angeordnet sind. Zwischen der Haltefläche 14a und dem von der ersten Haltefläche 14a abstehenden ersten Befestigungselement 18a ist ein Winkel β von 90° gebildet. Entsprechendes gilt für den Winkel β zwischen der Anlagefläche 14b und dem zweiten Befestigungselement 18b. Die beiden Befestigungselemente 18a, 18b sind im Bereich einander zugewandter Ecken auf der dem jeweiligen Anlageflächen 14a, 14b gegenüberliegenden Seiten miteinander verbunden.

Jedes der beiden Befestigungselemente 18a, 18b weist eine entsprechende Befestigungsfläche 24a, 24b auf, so dass auch die beiden Befestigungsflächen 24a, 24b rechtwinklig zueinander angeordnet sind.

Eine rechtwinklige, in dem in Figur 4 dargestellten Ausführungsbeispiel quadratische Verbindungsplatte 25 verbindet die beiden Teile 12a, 12b des Basiselements 12 und die beiden Befestigungselemente 18a, 18b miteinander. Dabei weist die Verbindungsplatte 25 eine erste, in Figur 4 obere Seite auf, von der der erste Teil 12a des Basiselements 12 und das erste Befestigungselement 18a abstehen, wobei der erste Teil 12a des Basiselements 12 und das erste Befestigungselement 18a an verschiedenen, in einer gemeinsamen Ecke aneinandergrenzenden Kanten der Verbindungsplatte angeordnet sind. Dabei ist der erste Teil 12a des Basiselements 12 an einer ersten Kante der Verbindungsplatte 25 angeordnet, während das Befestigungselement 18a an einer zweiten Kante der Verbindungsplatte 25 angeordnet ist. Die erste und die zweite Kante der Verbindungsplatte 25 grenzen in einer gemeinsamen Ecke unter einem Winkel β von 90° aneinander.

Von einer zweiten, der ersten Seite gegenüberliegenden und in Figur 4 unteren Seite der Verbindungsplatte 25 stehen der zweite Teil 12b des Basiselements 12 und das zweite Befestigungselement 18b ab. Dabei sind auch der zweite Teil 12b und das Befestigungselement 18b an verschiedenen, in einer gemeinsamen Ecke der Verbindungsplatte aneinandergrenzenden Kanten der Verbindungsplatte 25 angeordnet. Insbesondere ist der zweite Teil 12b des Basiselements 12 an einer dritten Kante, die der zweiten Kante gegenüberliegt und an die erste Kante unter einem Winkel β von 90° angrenzt, angeordnet. Das zweite Befestigungselement 18b ist dabei an einer vierten Kante, die von der ersten, zweiten und dritten Kante der Verbindungsplatte verschieden ist und unter einem Winkel β von 90° jeweils an die zweite Kante und die dritte Kante angrenzt, der Verbindungsplatte angeordnet.

Dadurch sind der erste Teil 12a und der zweite Teil 12b des Basiselements 12 auf verschiedenen Seiten der Verbindungsplatte 25 angeordnet und stehen von verschiedenen Seiten der Verbindungsplatte in entgegengesetzte Richtungen ab. Entsprechend sind auch die beiden Befestigungselemente 18a, 18b auf verschiedenen Seiten der Verbindungsplatte 25 angeordnet und stehen in entgegengesetzten Richtungen von der Verbindungsplatte 25 ab. Die Verbindungsplatte 25 verbindet somit den ersten Teil 12a mit dem zweiten Teil 12b des Basiselements 12 und darüber hinaus das erste Befestigungselement 18a mit dem zweiten Befestigungselement 18b.

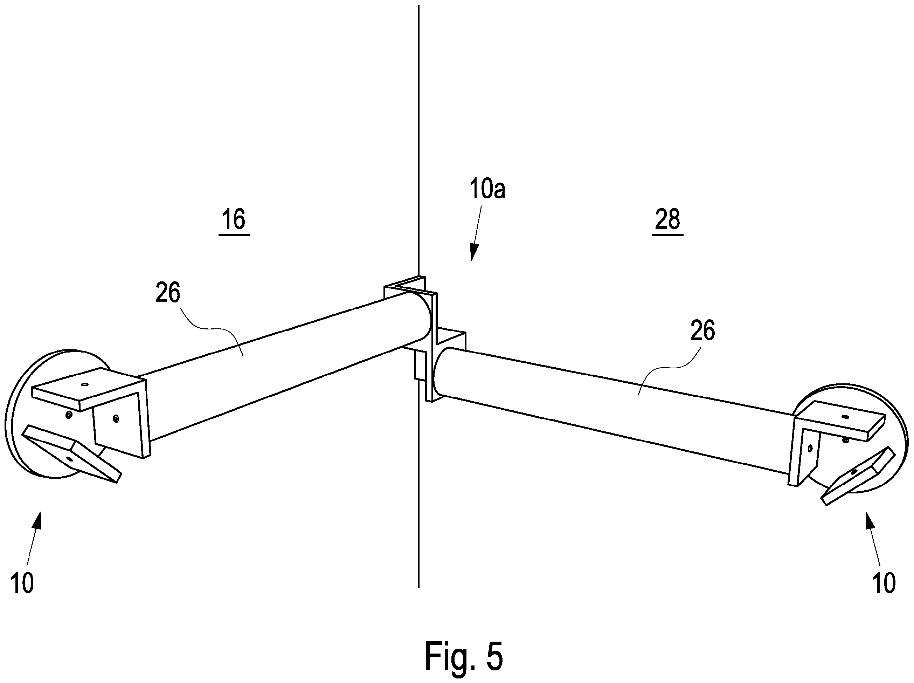

Mit Hilfe des Ausführungsbeispiels der Vorrichtung 10a gemäß Figur 4 ist es möglich, wie in Figur 5 dargestellt, benachbarte Kletterelemente auch im Bereich einer Raumecke zwischen benachbarten und rechtwinklig aufeinandertreffenden Raumwänden 16, 28 miteinander zu verbinden. Dadurch kann ein geschlossenes System benachbarter Kletterelemente auch über eine Raumecke hinaus gebildet werden, so dass sich das System von einer ersten Raumwand 16 auf eine rechtwinklig zu der Raumwand 16 angeordnete zweite Raumwand 28 erstreckt.

## Patentansprüche

1. Vorrichtung (10, 10a) zur Befestigung von langgestreckten Kletterelementen (26) an einer Wand (16, 28), mit mindestens einem ersten flächigen Basiselement (12), das zur Befestigung an der Wand (16, 28) ausgebildet ist, wobei das Basiselement (12) eine Anlagefläche für die Wand und eine auf der der Anlagefläche gegenüberliegenden Seite ausgebildete Haltefläche (14, 14a, 14b) aufweist,
**gekennzeichnet durch**
mindestens zwei flächige Befestigungselemente (18a, 18b, 18c), die jeweils rechtwinklig von der Haltefläche (14, 14a, 14b) abstehen und in einem Winkel α im Bereich 0°<α≤90° zueinander angeordnet sind, wobei jedes Befestigungselement (18a, 18b, 18c) eine nach außen weisende Befestigungsfläche (24, 24a, 24b) aufweist, die zur Befestigung eines langgestreckten Kletterelements (26) ausgebildet ist.

2. Vorrichtung (10, 10a) nach Anspruch 1, **dadurch gekennzeichnet, dass** das Basiselement (12) eine Kreisscheibe oder eine Vieleckscheibe, zum Beispiel eine Rechteck- oder Dreieckscheibe ist.

3. Vorrichtung (10, 10a) nach Anspruch 1 oder 2, **dadurch gekennzeichnet, dass** mindestens ein Befestigungselement an dem Basiselement rotierbar angeordnet ist.

4. Vorrichtung (10) nach einem der Ansprüceh 1-3, **dadurch gekennzeichnet, dass** mindestens drei Befestigungselemente (18a, 18b, 18c) vorgesehen sind, von denen zwei in einem Winkel α₁ von ungefähr 90° zueinander angeordnet sind und das dritte Befestigungselement (18c) zu dem ersten und/oder zweiten Befestigungselement (18a, 18b) in einem Winkel α₂ von ungefähr 45° angeordnet ist.

5. Vorrichtung (10a) nach einem der vorhergehenden Ansprüche, **dadurch gekennzeichnet, dass** das Basiselement (12) einen ersten Teil (12a) mit einer ersten Anlagefläche für eine erste Wand (16) und einen zweiten Teil (12b) mit einer zweiten Anlagefläche für eine zweite, von der ersten verschiedene Wand (28) aufweist, wobei die beiden Anlageflächen in einem Winkel β von ungefähr 90° zueinander angeordnet sind.

6. Vorrichtung (10a) nach dem vorhergehenden Anspruch, **dadurch gekennzeichnet, dass** auf jeder der beiden Anlageflächen gegenüberliegenden Seiten jeweils eine Haltefläche (14a, 14b) ausgebildet ist und von jeder der beiden Halteflächen (14a, 14b) ein Befestigungselement (18a, 18b) rechtwinklig absteht, wobei die beiden Befestigungselemente (18a, 18b) in einem Winkel β von ungefähr 90° zueinander angeordnet sind.

7. Vorrichtung (10a) nach dem vorhergehenden Anspruch, **dadurch gekennzeichnet, dass** eine rechteckige Verbindungsplatte (25) vorgesehen ist, die die beiden Teile (12a, 12b) des Basiselements (12) und die beiden Befestigungselemente (18a, 18b) miteinander verbindet, wobei der erste Teil (12a) des Basiselements (12) und das erste Befestigungselement (18a) auf einer ersten Seite der Verbindungsplatte (25) und der zweite Teil (12b) des Basiselements und das zweite Befestigungselement (18b) auf einer zweiten, der ersten Seite gegenüberliegenden zweiten Seite der Verbindungsplatte (25) angeordnet sind.
